# EUROPEAN PATENT APPLICATION

(11) **EP 3 032 509 A2**
(43) Date of publication of application: **15.06.2016**
(21) Application number: 15198287.3
(22) Date of filing: 07.12.2015
(51) Int. Cl.: G08B 13/24, E05B 73/00, G06K 19/00

(54) **TAG DEVICE AND SYSTEM**

(30) Priority: 08.12.2014 US 201414563736
(71) Applicant: Checkpoint Systems, Inc., Thorofare, NJ 08086 (US)
(72) Inventor: ZENG, Kefeng, WEST DEPTFORD, NJ 08086 (US)
(74) Representative: Studio Torta S.p.A.

(57) **Abstract**

A device and system utilizing the ground plane of a printed circuit board (PCB) for an antenna. In one embodiment, the device can be a tag comprising a housing forming a housing cavity; a PCB positioned in the housing cavity, wherein the PCB comprises a ground plane forming an antenna; and a first circuit operably coupled to the antenna.

## Description

### CROSS REFERENCE TO RELATED APPLICATION

The present application claims priority to U.S. Patent Application Serial Number 14/563,736, filed December 8, 2014, the entirety of which is incorporated herein by reference.

### BACKGROUND

In real world applications, tags must be designed to accommodate a predetermined form factor. Form factor requirements, however, can cause significant design challenges. For instance, a tag (e.g., a security tag) often must have a small size. If the tag is to include components such as a UHF RFID inlay, the challenge is increased. A conventional UHF RFID inlay includes an RFID antenna and an RFID chip. A standard RFID antenna, however, may be too large for certain tags, and a smaller version of the antenna may not meet performance requirements. For example, if the components of the tag are too close together, performance will be compromised. This is especially problematic when the tag is a battery-powered hard tag and contains additional electronic components.

### BRIEF SUMMARY

The present disclosure is directed to a device (i.e., a tag) and a tagging system for an item. In one embodiment, the device can be a tag comprising a housing forming a housing cavity; a printed circuit board (PCB) in the housing cavity, the PCB comprising a ground plane, the ground plane forming an antenna; and an RFID circuit operably coupled to the antenna; wherein the antenna is configured to communicate with an RFID reader.

In another embodiment, the device can be a tag comprising a housing forming a housing cavity; a PCB in the housing cavity, the PCB comprising a ground plane, the ground plane forming an antenna; and a first circuit operably coupled to the antenna.

The system of the present disclosure may comprise a tag comprising a housing forming a housing cavity; a PCB located within the housing cavity, the PCB comprising a ground plane, and the ground plane forming an antenna; and a circuit operably coupled to the antenna; and a transceiver configured to communicate with the tag.

Further areas of applicability of the present device and system will become apparent from the detailed description provided hereinafter. It should be understood that the detailed description and specific examples, while indicating the preferred embodiment of the device and system, are intended for purposes of illustration only and are not intended to limit the scope of the device and system.

### BRIEF DESCRIPTION OF THE DRAWINGS

The device and system of the present disclosure will become more fully understood from the detailed description and the accompanying drawings, wherein:
Figure 1 is a prior art tag.
Figure 2 is a tag and reader system according to one embodiment of the present disclosure.
Figure 3 is a tag according to one embodiment of the present disclosure.
Figure 4 is a PCB according to one embodiment of the present disclosure.
Figure 5 is a schematic view of the PCB according to one embodiment of the present disclosure.
Figure 6 is a cross section of a portion of the PCB according to one embodiment of the preset disclosure.
Figure 7 is a tag according to one embodiment of the present disclosure, the tag including an alarm module and a locking mechanism.

### DETAILED DESCRIPTION

The following description of the preferred embodiment(s) is merely exemplary in nature and is in no way intended to limit the device or system, its application, or uses.

The description of illustrative embodiments according to principles of the present device and system is intended to be read in connection with the accompanying drawings, which are to be considered part of the entire written description. In the description of the exemplary embodiments of the device and system disclosed herein, any reference to direction or orientation is merely intended for convenience of description and is not intended in any way to limit the scope of the present device or system. Relative terms such as "lower," "upper," "horizontal," "vertical," "above," "below," "up," "down," "left," "right," "top," "bottom," "front" and "rear" as well as derivatives thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," "secured" and similar refer to a relationship wherein structures are secured or attached to one another either directly or indirectly through intervening structures, as well as both movable or rigid attachments or relationships, unless expressly described otherwise. Moreover, the features and benefits of the device and system are described by reference to the exemplary embodiments illustrated herein. Accordingly, the device and system expressly should not be limited to such exemplary embodiments, even if indicated as being preferred. The discussion herein describes and illustrates some possible non-limiting combinations of features that may exist alone or in other combinations of features. The scope of the device and system is defined by the claims appended hereto.

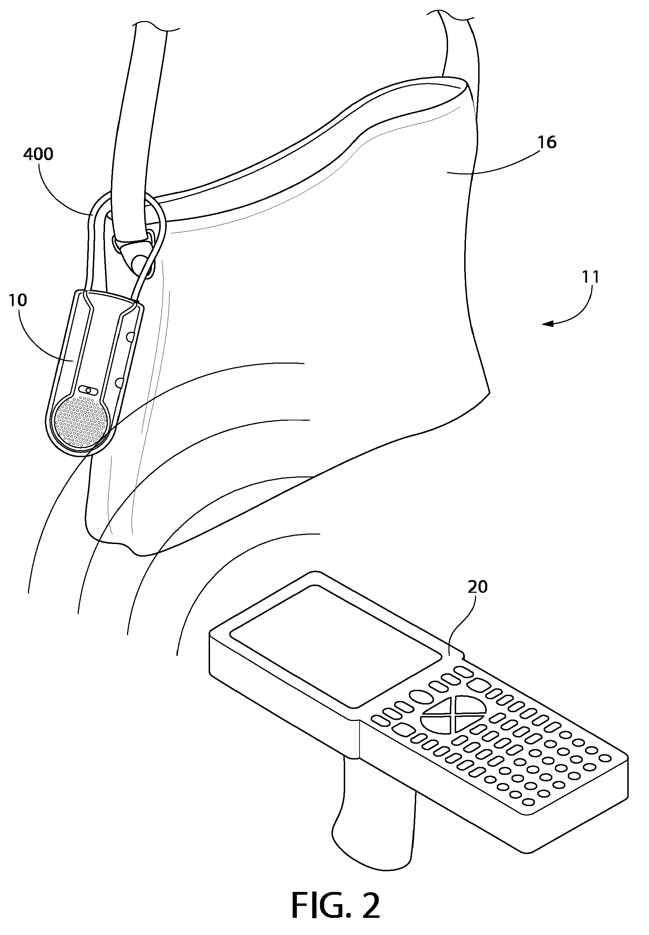

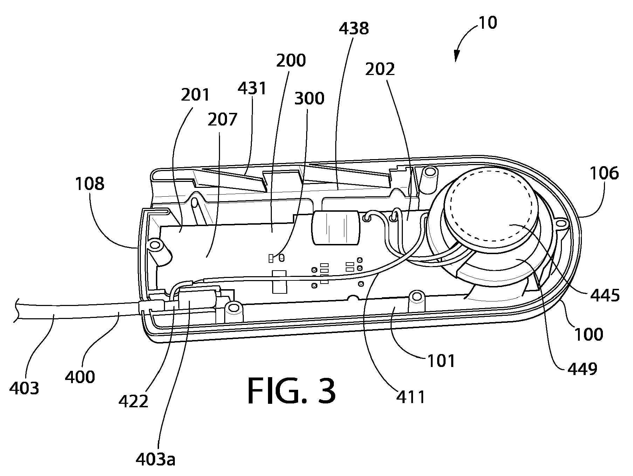

Figure 2 shows a tag 10 and reader 20 of a system 11 according to one embodiment of the device. The tag 10 is attached to a retail item 16 by an attachment mechanism 400. The attachment mechanism 400 includes a cable 403 (see Fig. 3). In alternative embodiments, the attachment mechanism 400 can be any type of mechanism capable of attaching a tag 10 to an item 16, including but not limited to a pin and ball clutch mechanism, a magnet, a clasp, a hook, and an adhesive.

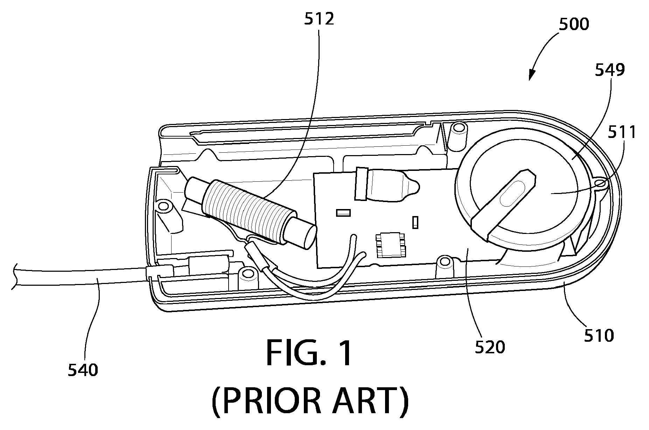

Figure 1 shows the inside of a prior art security tag 500-specifically, the 3-alarm CableLok® offered by Alpha® High Theft Solutions, a division of Checkpoint® Systems, Inc. Tag 500 comprises a housing 510, a power source 549, an electronic article surveillance (EAS) antenna 512, a cable 540, a printed circuit board (PCB) 520, and an alarm 511. The tag 500 can sound the alarm 511 if the cable 540 is tampered with. Further, the EAS antenna 512 can activate an EAS alarm at a security gate. The EAS antenna 512 is a radio frequency (RF) antenna tuned to approximately an 8.2 MHz frequency range. The EAS antenna 512 can receive an EAS interrogation signal from an EAS transmitter and can respond by transmitting an EAS response signal to an EAS receiver, thereby causing a security gate to alarm when the tag 500 approaches a security gate at an exit. As can be seen in Figure 1, the components of the prior art tag 500 occupy significant space within the housing 100 such that it would be difficult to add further functionality to the tag 500.

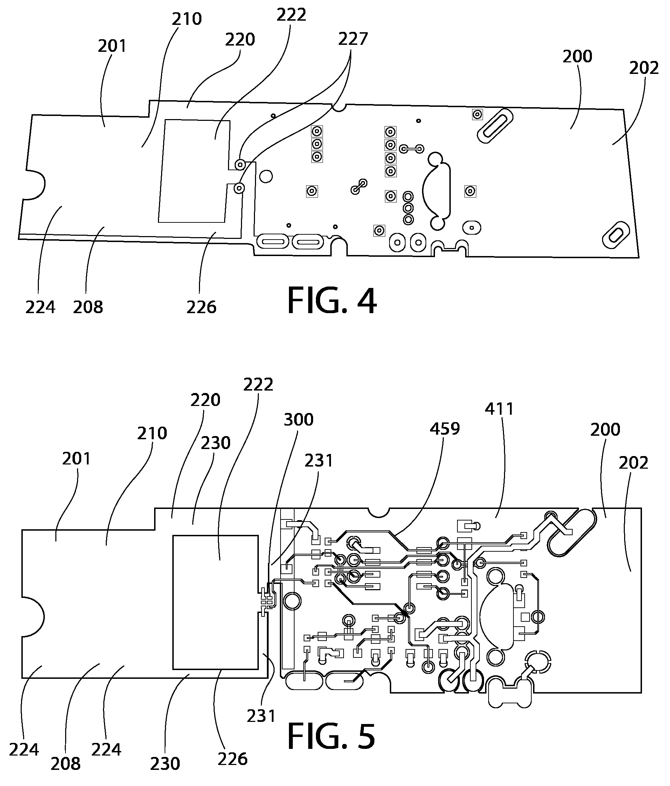

Referring now to Figure 3, a new tag 10 is shown according to one embodiment of the device. In this embodiment, the PCB 200 extends to the bottom 108 of the housing 100. As shown in Figures 4 and 5, this extended PCB 200 of the exemplified embodiment is used to form an RFID antenna 220 from the ground plane 210 of the PCB 200, thus adding new functionality to the tag 10 without significantly altering the size or shape of the tag 10. The tag 10 of the exemplified embodiment, along with other embodiments, will be discussed in greater detail below.

The tag 10 of Figure 2 includes radio frequency identification (RFID) functionality. An RFID reader 20 can send a signal to the tag 10 and the tag 10 can respond to the reader 20 with a signal that includes information identifying the tag 10 and/or the retail item 16. Thus, the tag 10 has the ability to receive and transmit identification information. The RFID reader 20 can be any device that can send signals to and receive signal from an RFID tag. The device, however, is not limited to RFID systems. In alternative embodiments, the tag 10 can communicate with a transceiver 20 that does not use RFID functionality.

In one embodiment, the tag 10 uses passive RFID technology and the tag 10 RFID response signal is generated using modulated backscatter technology. Thus, the tag 10 can convert the energy received from the RFID reader 20 signal into electricity that can provide power to the integrated circuit (IC) 300 of the tag. The tag 10 is then able to send data stored on the IC 300 to the RFID reader 20. In other embodiments, the device and system can utilize alternative RFID technologies, such as semi-passive and active RFID, which utilize battery power to increase the read distance (the distance at which the tag 10 can be detected).

Figure 3 provides a view inside the housing 100 of one embodiment of the tag 10. The tag 10 comprises a housing 100, the housing forming a housing cavity 101. The housing cavity 101 can be any unfilled space formed by the housing. In the cavity 101 is a PCB 200. Figure 3 shows the first surface 207 of the PCB 200. The PCB 200 extends further towards the bottom 108 of the housing 100. As will be shown in Figure 4-7, the extended PCB 200 allows an antenna 220 to be formed entirely (or partially) from the ground plane 210 of the PCB 200. The antenna 220 can be an RFID antenna or any other type of antenna capable of transmitting and/or receiving electromagnetic waves.

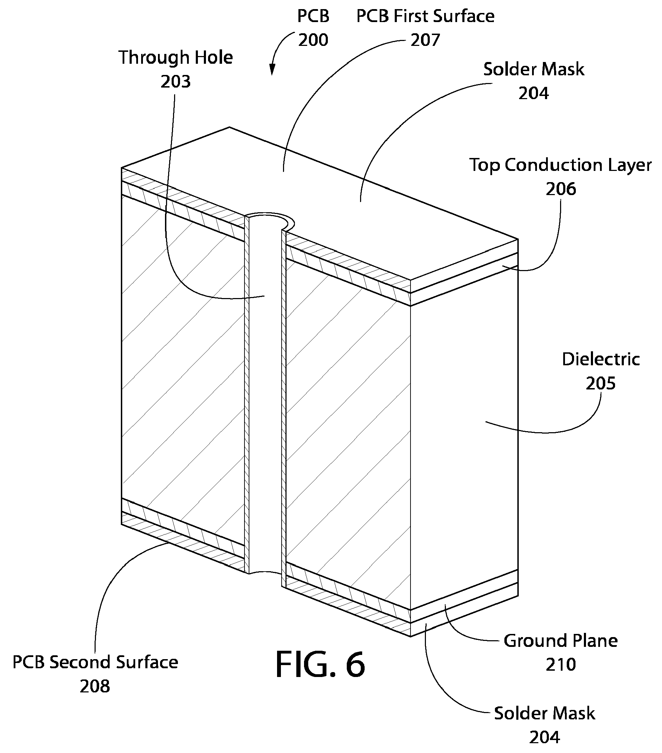

In the exemplified embodiment, the PCB 200 has conductive tracks that are etched from copper sheets and laminated onto a non-conductive substrate. In other embodiments, the PCB 200 can be any substantially planar board that provides mechanical support and electrically connects electronic components, including a printed wiring board, an etched wiring board, and a printed circuit assembly. The PCB 200 will be discussed further with respect to Figure 6.

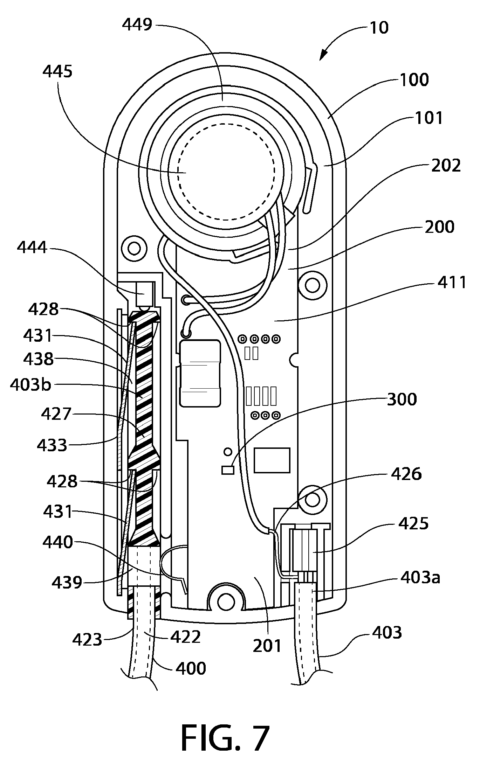

The exemplified embodiment further includes a power source 449, an alarm module 411, and an audible alarm 445. In this embodiment, the audible alarm 445 and power source 449 are adjacent the top 106 of the housing 100. The power source 449 can be a battery or any other source of electrical energy. The alarm module 411 is configured to alarm when the integrity of the attachment mechanism 400 is compromised. The alarm module 411 can be powered by the power source 449. In the exemplified embodiment, the alarm is audible and is provided by audible alarm 445. In alternative embodiments, the alarm can be any type of warning perceptible to a person, including a visual indicator (e.g., a blinking light) or a vibration. The alarm module 411 will be discussed in greater detail with respect to Figure 7.

The exemplified embodiment of Figure 3 further comprises a cable 403, the cable 403 forming part of the attachment mechanism 400. The first end 403a of the cable 403 is connected to the housing 100 of the tag 10. The cable 403 includes an electrical conductor 422 that extends through the cable 403 and is electrically connected to the alarm module 411. The second end 403b of the cable 403 (shown in Figure 7) is configured to engage a locking mechanism 431 in the locking channel 438. The operation of the attachment mechanism 400 and locking mechanism 431 will be explained in greater detail with regard to Figure 7. In other embodiments, the attachment mechanism 400 can be any type of mechanism capable of attaching a tag 10 to an item 16 (Figure 2), including but not limited to a pin and ball clutch mechanism, a magnet, a clasp, a hook, and an adhesive.

Referring now to Figure 4, a view of the second surface 208 of the PCB 200 is provided. From this view can be seen the ground plane 210 of the PCB 200. In the exemplified embodiment, the ground plane 210 may be a large area of foil (e.g., copper foil) on the PCB 200 that is connected to the power supply ground terminal, serving as a return path for current from different electrical components on the PCB 200. In other embodiments, the ground plane 210 can be any plane comprising conductive material that can serve as a common return path for electric current.

The PCB 200 has a first side 201 and a second side 202. In the exemplified embodiment, the ground plane 210 is etched to form an RFID ultra high frequency (UHF) antenna 220 on the first side 201 of the second surface 208 of the PCB 200. In other embodiments, however, the tag 10 can operate at any frequency sufficient for communication.

The RFID antenna 220 of the exemplified embodiment comprises a far field antenna 224 and a near field loop antenna 226. As shown in Figure 4, the near field loop antenna 226 may comprise connection pads 227 that enable the loop antenna 226 to operably couple to an RFID integrated circuit (IC) 300. As shown in Figure 5, the near field loop antenna 226 comprises (a) two side portions 230 substantially parallel to each other and (b) two leg portions 231 substantially parallel to each other and perpendicular to the side portions 230. The connection pads 227 are located at the two leg portions 231. In other embodiments, the near field loop antenna 226 and/or the far field antenna 244 can take different shapes capable of sending and receiving signals, such as shapes including a saw tooth or sine wave pattern. In yet other embodiments, the antenna 220 can be a high frequency (HF) antenna or any other type of antenna, such as a monopole antenna, a folded dipole antenna, a spiral antenna, a reflector antenna, a bow-tie antenna, or a slot antenna.

In the exemplified embodiment, the rectangular opening 222 where the ground plane 210 is etched is used to tune the tag frequency. The antenna 220 of the embodiment shown in Figure 4 is configured to communicate with an RFID reader 20. In other embodiments, the antenna 220 can be configured to communicate with any transmitter or receiver of electromagnetic waves, such as a radio, a beacon, a cell phone, or a Bluetooth-enabled device.

In the exemplified embodiment, the tag 10 is an RFID tag. In other embodiments, the tag 10 can be a dual RFID-EAS tag, in which the tag 10 has both RFID functionality and EAS functionality. In yet other embodiments, the antenna 220 can be neither an RFID nor an EAS antenna, and instead perform other types of functions.

Figure 5 shows a schematic view of the second surface 208 of the PCB 200 according to the exemplified embodiment. The antenna 220 can operably couple to an RFID circuit 300. In the exemplified embodiment, the RFID circuit is an RFID IC 300. The IC 300 can be a microelectronic semiconductor device for carrying out RFID functionality. The operable coupling of the IC 300 to the near field loop antenna 226 can be accomplished by electrically coupling contacts of the IC 300 to the connection pads 227 of the near field loop antenna 226. Such coupling can utilize conductive flanges that connect to the IC 300 contacts to form a chip strap that bridges the gap in the near field loop antenna 226. By non-limiting example, see U.S. Pat. No. 6,940,408 (Ferguson, et al.); U.S. Pat. No. 6,665,193 (Chung, et al.); U.S. Pat. No. 6,181,287 (Beigel); and U.S. Pat. No. 6,100,804 (Brady, et al.), as well as U.S. Pat. No. 7,646,305 (Cote, et al.), all of which are incorporated by reference herein. In other embodiments, the operable coupling of the IC 300 and near field loop antenna 226 can be accomplished by any means sufficient to enable the IC 300 and the near field loop antenna 226 to communicate data. In other embodiments, the circuit 300 operably coupled to the antenna 220 can be a different type of electronic circuit, including a non-RFID circuit.

In one embodiment, the tag 10 can be an RFID tag in semi-passive or activate operation. In such an embodiment, the antenna 220 operably couples to the power source 449 (shown in Figure 3). The power source 449 can connect to the VDD pin of the IC 300. The connection can be made through a trace on the PCB 200. In other embodiments, the antenna 220 can operably couple to the power source 449 by a wire or other conductor sufficient for transmitting power to the antenna 220. In other embodiments, the tag 10 can operate in RFID passive mode. In yet other embodiments, the circuit 300 operably coupled to the antenna 220 can be a non-RFID circuit that is or is not operably coupled to a power source 449.

In the embodiment of Figure 5, the PCB 200 comprises opposing and nonoverlapping first and second sides 201, 202. In the embodiment, the antenna 220 is located at the first side 201 of the PCB 200, and an alarm circuit 459 is located at the second side 202 of the PCB 200. Further, the IC 300 is located substantially between the antenna 220 and the alarm circuit 459. In alternative embodiments, the antenna 220, IC 300, and alarm circuit 459 can be located at any side or portion of the PCB 200. The alarm circuit 459 will be discussed in greater detail with respect to Figure 7.

Figure 6 shows a cross section of a portion of the PCB 200 of the exemplified embodiment. The PCB 200 may comprise a first surface 207 and a second surface 208. The PCB 200 may further comprise a top conductive layer 206 and a ground plane 210 separated by a dielectric 205. Covering each of the top conductive layer 206 and the ground plane 210 is a solder mask 204, a thin polymer layer to protect against oxidation and solder bridges forming between closely spaced solder pads. The PCB 200 further comprises a through hole 203. Electrical components on the PCB 200 needing grounding can be routed directly through the through holes 203 to the ground plane 210.

In other embodiments, the PCB 200 can comprise additional conductive layers and dielectrics, and the solder mask 204 can be omitted from either surface 207, 208 of the PCB 200. Further, the through hole 203 can be omitted. In yet other embodiments, the PCB 200 can be any substantially planar board that provides mechanical support and electrically connects electronic components, including a printed wiring board, an etched wiring board, and a printed circuit assembly.

Referring now to Figure 7, the alarm module 411 and locking mechanism 431 of the tag 10 is shown according to one embodiment. The tag 10 comprises a housing 100, and the housing 100 forms a housing cavity 101. The PCB 200 is within the housing cavity 101. The tag 10 further comprises an attachment mechanism 400 configured to attach and detach the tag 10 to an item 16. The attachment mechanism 400 comprises a cable 403 having a first end 403a and a second end 403b. In other embodiments, the attachment mechanism 400 can comprise any type of mechanism capable of attaching a tag 10 to an item 16, including but not limited to a pin and ball clutch mechanism, a magnet, a clasp, a hook, and an adhesive.

In the exemplified embodiment, the attachment mechanism 400 further comprises a locking mechanism 431 mounted in the housing 100. The locking mechanism 431 enables a portion of the attachment mechanism 400 to lock and unlock from the housing 100 of the tag 10. In the exemplified embodiment, the locking mechanism 431 comprises spring-biased metal tines 431. The tines 31 can be lanced from a flat spring metal strip 433 of material to extend outwardly into the locking channel 438. The second end 403b of the cable 403 is connected to an elongated plug 427. The elongated plug 427 comprises locking shoulders 428. When the elongated plug 427 of the cable 403 enters the locking channel 438 to be in locked position, the distal ends of the tines 431 engage with the shoulders 428 of the plug 427 to prevent the removal of the plug 427 from the locking channel 438. Accordingly, the second end 403b of the cable 403 is secured to the housing 100 by the locking mechanism 431.

In the exemplified embodiment, to unlock the locking mechanism 431, a magnetic key (not shown) can be used to move the metal tines 431 from their locked position of Figure 7 to an unlocked position by attracting the tines 431 towards the metal strip 433. When the tines 431 are moved to the unlocked position, the locking shoulders 428 of the plug 427 are no longer obstructed, such that the plug 427 can be removed from the locking channel 438 and the second end 403b of the cable 403 is no longer secured to the housing 100 by the locking mechanism 431. The device and system, however, are not limited to the locking mechanism 431 of the exemplified embodiment. In alternative embodiments, the locking mechanism 431 can comprise any mechanism sufficient to lock and unlock a portion of the attachment mechanism 400 from the tag 10. In yet other embodiments, a locking mechanism 431 can be omitted from the tag 10.

The tag 10 of the exemplified embodiment further comprises an alarm module 411 operably coupled to the attachment mechanism 400. The alarm module 411 is configured to alarm when the integrity of the attachment mechanism 400 is compromised. In the exemplified embodiment, the integrity of the attachment mechanism 400 would be compromised if the cable 403 was cut or one of the ends of the cable 403 was forcibly removed from the housing 100 or disconnected from the PCB 200. Such an event would disrupt the flow of electricity in the alarm circuit 459, thereby triggering the alarm module 411 to alarm. In other embodiments, the integrity of the attachment mechanism 400 can be considered compromised when a pin is removed, a connector is severed or any portion of an attachment mechanism 400 is tampered with.

In the exemplified embodiment of Figure 7, the alarm module 411 comprises the alarm circuit 459, the alarm circuit 459 being located on the PCB 200. An electrical conductor 422 extends through the cable 403 and is surrounded by a dielectric 423. The cable 403 terminates at the first end 403a with a connector 425. At the first end 403a of the cable 403, an electrical conductor 426 electrically connects the electrical conductor 422 of the cable 403 with the alarm circuit 459.

The electrical conductor 422 of the cable 403 is electrically connected to the alarm circuit 459 at the second end 403b of the cable 403 by a metallic terminal 439 mounted on the second end 403b of the cable 403. The metallic terminal 439 engages a spring contact 440 electrically connected to the alarm circuit 459.

Further, a plunger switch 444 is located in the housing 100 and is configured to be compressed by the second end 403b of the cable 403 when the second end 403b of the cable 403 is locked to the housing 100. The compression of the plunger switch 444 enables the activation of the alarm module 411. The alarm module 411 can further comprise an audible alarm 445. When the alarm module 411 is activated, the audible alarm 445 can be actuated when the integrity of the attachment mechanism 400 is compromised. The audible alarm 445 can be configured to actuate under other circumstances, such as when an EAS component is in the housing 100 and approaches an EAS gate. Further, the alarm module 411 can comprise any type of alarm or warning perceptible to a person, including a visual indicator (e.g., a blinking light) or a vibration.

As stated above, the device and system described within the present disclosure are not limited to the exemplified alarm module 411. In other embodiments, the alarm module 411 can use a variety of conductor mechanisms to ensure a flow of electricity through the cable 403 and to the alarm circuit 459. Elements such as the plunger switch 444 can be omitted. Other methods for configuring an attachment mechanism 400, alarm module 411, and locking mechanism 431 for a tag 10 are discussed in U.S. Patent Publications 2013/0098122 and 2006/0170550, the entireties of which are hereby incorporated by reference. Further, the attachment mechanism 400, alarm module 411, and/or locking mechanism 431 can be omitted.

While the device and system have been described with respect to specific examples including presently preferred modes of carrying out the device and system, those skilled in the art will appreciate that there are numerous variations and permutations of the above described systems and techniques. It is to be understood that other embodiments may be utilized and structural and functional modifications may be made without departing from the scope of the present device and system. Thus, the spirit and scope of the device and system should be construed broadly as set forth in the appended claims.

## Claims

1. A tag, comprising:
a housing forming a housing cavity;
a printed circuit board (PCB) positioned in the housing cavity, wherein the PCB comprises a ground plane forming an antenna; and
a first circuit operably coupled to the antenna.

2. The tag of claim 1, wherein the first circuit is an RFID integrated circuit.

3. The tag of any of the preceding claims, wherein the antenna is configured to communicate with a transceiver.

4. The tag of any of the preceding claims, wherein the antenna is an ultra high frequency antenna.

5. The tag of claim 4, wherein the antenna comprises (a) two side portions substantially parallel to each other and (b) two leg portions substantially parallel to each other and perpendicular to the side portions.

6. The tag of any of the preceding claims, wherein the PCB comprises opposing and nonoverlapping first and second sides, the antenna located at the first side of the PCB, and a second circuit located at the second side of the PCB.

7. The tag of any of the preceding claims, wherein a power source is located in the cavity, and wherein the antenna is operably coupled to the power source.

8. The tag of any of the preceding claims, wherein the tag further comprises an attachment mechanism configured to attach and detach the tag to an item.

9. The tag of claim 8, wherein the tag further comprises an alarm module operably coupled to the attachment mechanism, the alarm module comprising an alarm circuit located on the PCB, and wherein the alarm module is configured to alarm when the integrity of the attachment mechanism is compromised.

10. The tag of claim 9, wherein the attachment mechanism further comprises a locking mechanism located in the housing and a cable having a first end and a second end, the first end of the cable connected to the housing and the second end of the cable configured to engage the locking mechanism, the locking mechanism configured to move between a locked position and an unlocked position to lock and unlock the second end of the cable to the housing.

11. The tag of claim 10, wherein:
an electrical conductor (a) extends through the cable, (b) is electrically connected to the alarm circuit at the first end of the cable, and (c) is electrically connected to the alarm circuit at the second end of the cable by a metallic terminal mounted on the second end of the cable; and
the metallic terminal engages a spring contact electrically connected to the alarm circuit.

12. The tag of claim 11, wherein:
the second end of the cable is connected to an elongated plug, the second end of the cable configured to engage the locking mechanism by the plug; and
a plunger switch is located in the housing and is configured to be compressed by the elongated plug when the second end of the cable is locked to the housing, the compression of the plunger switch activating the alarm module.

13. A system comprising:
a tag comprising:
a housing forming a housing cavity;
a printed circuit board (PCB) located within the housing cavity, the PCB comprising a ground plane, and the ground plane forming an antenna; and
a circuit operably coupled to the antenna; and
a transceiver configured to communicate with the tag.

14. The system of claim 13, wherein the circuit is an RFID integrated circuit, the antenna is an ultra high frequency antenna, and the transceiver is an RFID reader.

15. The system of any of claims 13-14, wherein the PCB comprises opposing and nonoverlapping first and second sides, the antenna located at the first side of the PCB, and a second circuit located at the second side of the PCB, and wherein the RFID circuit is located substantially between the antenna and the second circuit.
